# EUROPEAN PATENT SPECIFICATION

(11) **EP 4 528 663 B1**
(45) Date of publication and mention of the grant of the patent: **11.11.2026**
(21) Application number: 23198631.6
(22) Date of filing: 20.09.2023
(51) Int. Cl.: G06V 10/44, G06V 10/774, G06V 10/776, G06V 10/82, G06V 20/58, G06V 20/56, G06N 3/0455, G06N 3/047, G06N 3/088, G06N 3/09, G06N 3/0464, G06N 3/084

(54) **DEVICE AND COMPUTER-IMPLEMENTED METHODS FOR MACHINE LEARNING, FOR PROVIDING A MACHINE LEARNING SYSTEM, OR FOR OPERATING A TECHNICAL SYSTEM**
VORRICHTUNG UND COMPUTERIMPLEMENTIERTE VERFAHREN ZUM MASCHINELLEN LERNEN, ZUM BEREITSTELLEN EINES MASCHINELLEN LERNSYSTEMS ODER ZUM BETREIBEN EINES TECHNISCHEN SYSTEMS
DISPOSITIF ET PROCÉDÉS MIS EN OEUVRE PAR ORDINATEUR POUR L'APPRENTISSAGE AUTOMATIQUE, POUR FOURNIR UN SYSTÈME D'APPRENTISSAGE AUTOMATIQUE, OU POUR FAIRE FONCTIONNER UN SYSTÈME TECHNIQUE

(43) Date of publication of application: 26.03.2025
(73) Proprietor: Robert Bosch GmbH, 70442 Stuttgart (DE)
(72) Inventor: Khoreva, Anna, 70197 Stuttgart (DE); Li, Yumeng, 72070 Tuebingen (DE); Zhang, Dan, 71229 Leonberg (DE)

(56) References cited:
- DONGJUN KIM ET AL: "Refining Generative Process with Discriminator Guidance in Score-based Diffusion Models", ARXIV.ORG, CORNELL UNIVERSITY LIBRARY, 4 June 2023 (2023-06-04), XP091528213
- SUSHKO VADIM ET AL: "OASIS: Only Adversarial Supervision for Semantic Image Synthesis", INTERNATIONAL JOURNAL OF COMPUTER VISION, vol. 130, no. 12, 17 September 2022 (2022-09-17), pages 2903 - 2923, XP093109193, ISSN: 0920-5691, DOI: 10.1007/s11263-022-01673-x
- MUZAFFER ÖZBEY ET AL: "Unsupervised Medical Image Translation with Adversarial Diffusion Models", ARXIV.ORG, CORNELL UNIVERSITY LIBRARY, 31 March 2023 (2023-03-31), XP091472782
- ZHISHENG XIAO ET AL: "Tackling the Generative Learning Trilemma with Denoising Diffusion GANs", ARXIV.ORG, CORNELL UNIVERSITY LIBRARY, 4 April 2022 (2022-04-04), XP091195981
- BINGXUAN XU ET AL: "Latent Semantic Diffusion-based Channel Adaptive De-Noising SemCom for Future 6G Systems", ARXIV.ORG, CORNELL UNIVERSITY LIBRARY, 19 April 2023 (2023-04-19), XP091488796
- KARLINSKY L ET AL (EDS.): "ECCV 2022 Workshops", vol. LNCS 138, 16 February 2023, SPRINGER INTERNATIONAL PUBLISHING, ISBN: 978-3-030-90436-4, article CAREIL MARLÈNE ET AL: "Unifying Conditional and Unconditional Semantic Image Synthesis with OCO-GAN", pages: 239 - 255, XP047651000
- MARWANE HARIAT ET AL: "Learning to Generate Training Datasets for Robust Semantic Segmentation", ARXIV.ORG, CORNELL UNIVERSITY LIBRARY, 1 August 2023 (2023-08-01), XP091587399

## Description

### Background

The invention relates to a device and a computer-implemented methods for machine learning, for providing a machine learning system, or for operating a technical system.

A diffusion model may be used in machine learning for generating synthetic digital images, e.g., for training, testing, verifying and/or validating the machine learning system depending on the synthetic digital image.

The diffusion model may be trained unconditionally or conditionally.

Dongjun Kim et al: "Refining Generative Process with Discriminator Guidance in Score-based Diffusion Models" , arXiv.org, Cornell University Library, 4 June 2023, discloses a method, which aims at improving sample generation of pre-trained diffusion models. The method introduces a discriminator that gives explicit supervision to a denoising sample path by determining whether a sample is realistic or not. The discriminator is trained after score training. In sample generation, an auxiliary term is added to the pre-trained score to deceive the discriminator. This term corrects the model score.

In addition, Sushko Vadim et al: "OASIS:
Only Adversarial Supervisoin for Semantic Image Synthesis", International Journal of Computer Vision, vol. 130, no 12, 17 September 2022, pages 2903-2923 , Muzaffer Ozbey et al: "Unsupervised Medical Image Translation with Adversarial Diffusion Models" , arXiv.org, Cornell University Library, 31 March 2023, and Zhisheng Xiao et al: "Tackling the Generative Learing Trilemma with Denoising Diffusion GANs" , arXiv.org, Cornell University Library, 4 April 2022, also disclose aspects of image synthesis.

### Disclosure of the invention

The device and the computer-implemented methods according to the independent claims provide a machine learning with a diffusion model and a discriminator for providing guidance, wherein learning parameters of the diffusion model and/or the discriminator are learned depending on the guidance provided by the discriminator in the unconditional or conditional case. The diffusion model may be a neural network. The parameters of the diffusion model may be weights of the neural network resembling the diffusion model. The discriminator may be a neural network. The parameters of the discriminator may be weights of the neural network resembling the discriminator.

A computer-implemented method for machine learning, in particular for generating training and/or test data for training a machine learning system or for training an image classifier, comprises providing a latent variable of a diffusion model representing the synthetic digital image, wherein providing the latent variable comprises sampling the latent variable from random noise, or providing a digital reference image, and adding noise with the diffusion model to the digital reference image to determine the latent variable, or mapping the digital reference image with an encoder to an input of the diffusion model, and adding noise with the diffusion model to the input to determine the latent variable, wherein the method further comprises mapping the latent variable with the diffusion model depending on parameters of the diffusion model to features of the diffusion model, mapping the features with the diffusion model depending on parameters of the diffusion model to an output of the diffusion model, wherein the synthetic digital image comprises the output, or wherein the method comprises mapping the output with a decoder to the synthetic digital image, mapping the features or the synthetic digital image with a discriminator to a class, in particular either a class of a predetermined set of classes for a real digital image or a class for a synthetic digital image, depending on parameters of the discriminator, and learning at least one parameter of the diffusion model and/or the discriminator depending on a loss for the discriminator that is defined depending on the class and a predetermined reference class, wherein the method comprises determining a sequence of outputs comprising the output, wherein determining the sequence of outputs comprises determining a first output of the sequence depending on a result of encoding the input and decoding the encoded input, and successively determining a next output in the sequence depending on the result of encoding the output preceding the next output in the sequence and decoding the encoded output preceding the next output in the sequence, wherein a first denoising stage of the diffusion model determines a respective next output depending on a result of encoding the output preceding the next output with an encoder of the first denoising stage and decoding the encoded input with a decoder the first denoising stage, and outputting the features of the encoder of the first denoising stage to the feature-based discriminator, and outputting the features of the encoder of the first denoising stage to the feature-based discriminator, wherein encoding with the encoder comprises determining the features, or outputting the features of the decoder of the first denoising stage to the feature-based discriminator, wherein decoding comprises determining the features. This means, the outputs and the features are determined in stages. discriminator may use features of the encoder or decoder at different stages. The discriminator may be semantic segmentation network based, i.e., segmenter based. The discriminator provides the guidance for learning.

The synthetic digital image comprises pixels. The method may comprise determining the class pixel-wise, and learning the at least one parameter depending on a loss that defined depending on the pixel-wise classes and respective predetermined pixel-wise reference classes. This means the discriminator provides the guidance pixel-wise in particular for the unconditional diffusion model to improve local details.

The method may comprise determining, with a respective discriminator, the class for a plurality of outputs of the sequence depending on features collected from the respective encoding or decoding, and learning the parameters depending on the losses that are defined for the discriminators depending on the class predicted by the respective discriminator and the predetermined reference class. A discriminator per stage in the plurality of stages may be used for providing the guidance. Instead of training the diffusion model to predict noise at a single, randomly sampled stage during training, a multistep sampling at the plurality of stages takes into account several stages. The stages may be a number of successive stages, i.e., stages within a horizon defined by the number of stages.

The method may comprise predicting a noise in a next output of the sequence depending on the output preceding the next output in the sequence of outputs, and learning the parameters depending a loss for noise and depending on the losses that are defined for the discriminators, wherein the loss for noise is defined depending on the predicted noise and a predetermined random noise, in particular random noise sampled from a Gaussian distribution. This reduces the memory consumption compared to using the loss for noise at several stages.

The method may comprise providing a condition, in particular a label map, modulating the features depending on the condition and mapping the modulated features with the diffusion model to the output, and/or with the discriminator to the class. The label map for example comprises a pixel-wise reference class for the pixel of the synthetic digital image. The implicit assumption is that the conditional information is beneficial for the noise prediction in the diffusion model, thus the denoising will learn to use the condition. With the discriminator there is explicit enforcement or supervision for the usage of condition.

The method may comprise learning the parameters depending on the loss that is defined for the discriminator, wherein the loss that is defined for the discriminator is defined depending on the condition, or learning the parameters depending on the losses that are defined for the discriminators, wherein the losses are defined depending on the condition. In the conditional case, additional guidance is provided that depends on the condition.

This discriminator provides in particular pixel-wise guidance and encourages the conditional alignment. The discriminator may be trained jointly with the diffusion model, and learns to predict the given label map condition on real samples and predict fake ones as the additional "fake" class. The diffusion model learns to generate realistic images aligned with the label map as synthetic digital images to fool the discriminator. In this way, the label map condition is explicitly leveraged during training.

The condition comprises the predetermined reference class or the pixel-wise reference classes, e.g., the label map, to provide the additional guidance.

The method can be comprised in a computer-implemented method for providing the machine learning system, in particular a neural network for semantic segmentation, object recognition, or classification of objects, comprises generating a synthetic digital image with the method for machine learning, and training, testing, verifying, or validating the machine learning system for semantic segmentation, or object recognition, or classification of objects, preferably for recognizing background or an object, in particular a traffic sign, a road surface, a pedestrian, a vehicle, an animal, a plant, infrastructure, or the sky, depending on the synthetic digital image.

Training the machine learning system may comprise providing the condition, in particular the label map that is provided for generating the synthetic digital image as ground truth for training the machine learning system.

The method can be comprised in a computer-implemented method for operating a technical system, in particular a computer-controlled machine, preferably a robotic system, a vehicle, a domestic appliance, a power tool, a manufacturing machine, a personal assistant or an access control system, comprises providing the machine learning system with the method for providing the machine learning system, capturing a digital image with a sensor, in particular a video, radar, LiDAR, ultrasonic, motion, or thermal image, and determining a control signal for operating the technical system with the machine learning system depending on the digital image.

A device may comprise at least one processor and at least one memory, wherein the at least one processor is configured to execute instructions that, when executed by the at least one processor, cause the device to execute the method for machine learning, for providing the machine learning system or operating the technical system, wherein the at least one memory is configured to store the instructions.

A computer program comprises computer-readable instructions that, when executed by a computer, cause the computer to execute the method according to one of the claims 1 to 10.

Further advantageous embodiments are derived from the following description and the drawing. In the drawing,
- Fig. 1: schematically depicts a device,
- Fig. 2: schematically depicts an exemplary diffusion model,
- Fig. 3: schematically depicts a feature-based discriminator,
- Fig. 4: schematically depicts an image-based discriminator,
- Fig. 5: schematically depicts a sequence of denoising stages of the diffusion model,
- Fig. 6: schematically depicts the sequence of denoising stages for remove the noise depending on a condition,
- Fig. 7: schematically depicts a flow chart of a first embodiment of a method for generating a synthetic digital image,
- Fig. 8: schematically depicts a flow chart of a second embodiment of the method for generating a synthetic digital image,
- Fig. 9: schematically depicts a flow chart of a third embodiment of the method for generating a synthetic digital image.

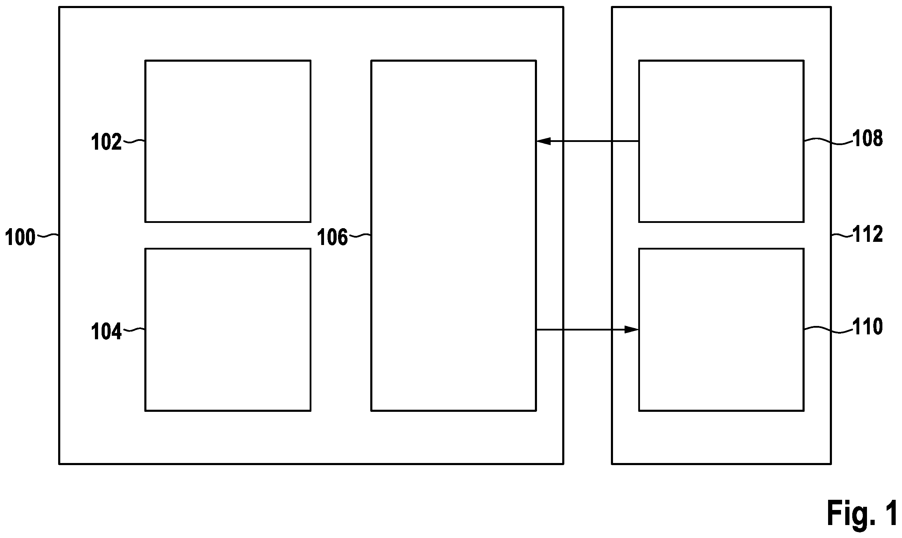

Figure 1 depicts schematically a device 100.

The device 100 comprises at least one processor 102 and at least one memory 104. The at least one memory 104 comprises at least one non-transitory memory. The at least one memory 104 is configured to store instructions that are executable by the at least one processor 102 and that cause the device 100 to perform a method for generating a synthetic digital image, when executed by the at least one processor 102.

The synthetic digital image may be a video, radar, LiDAR, ultrasonic, motion, or thermal image.

The device 100 may be configured to read a digital reference image from storage. The digital reference image may be a video, radar, LiDAR, ultrasonic, motion, or thermal image.

The device 100 may comprise at least one interface 106. The at least one interface 106 may be configured for receiving the digital reference image, e.g., from a sensor 108. The at least one interface 106 may be configured to output a control signal for an actuator 110.

The sensor 108 may be configured to capture a video, radar, LiDAR, ultrasonic, motion, or thermal image.

The sensor 108 or the actuator 110 may be part of a technical system 112. The technical system 112 is a physical system. The technical system 112 may be a computer-controlled machine, preferably a robotic system, a vehicle, a domestic appliance, a power tool, a manufacturing machine, a personal assistant or an access control system.

The device 100 may comprise a machine learning system that is configured to operate the technical system 112 depending on input from the sensor 108 and with output of the control signal to the actuator 110.

For example, the machine learning system is configured to determine the control signal for operating the technical system 112 depending on a digital image.

The digital image may be a video, radar, LiDAR, ultrasonic, motion, or thermal image.

Determining the control signal depending on the digital image for example comprises mapping the digital image with a neural network for semantic segmentation, object recognition or classification of objects.

Determining the control signal depending on the digital image for example comprises determining the control signal depending on an output of the neural network, e.g., the semantic segmentation, object recognition, or classification of objects.

For example, a background is distinguished from objects, or recognized, or classified as background in the digital image or an object is distinguished from background, or recognized, or classified, e.g., as a traffic sign, a road surface, a pedestrian, a vehicle, an animal, a plant, infrastructure, or the sky, depending on the synthetic digital image.

For example, the control signal is determined to move the technical system 112 upon recognizing or classifying the object as a predetermined object indicating that moving the technical system 112 is acceptable or stopping the technical system 112 otherwise or upon recognizing or classifying the object as a predetermined object indicating that stopping the technical system 112 is required.

Classifying the object may comprise segmentation and/or object detection.

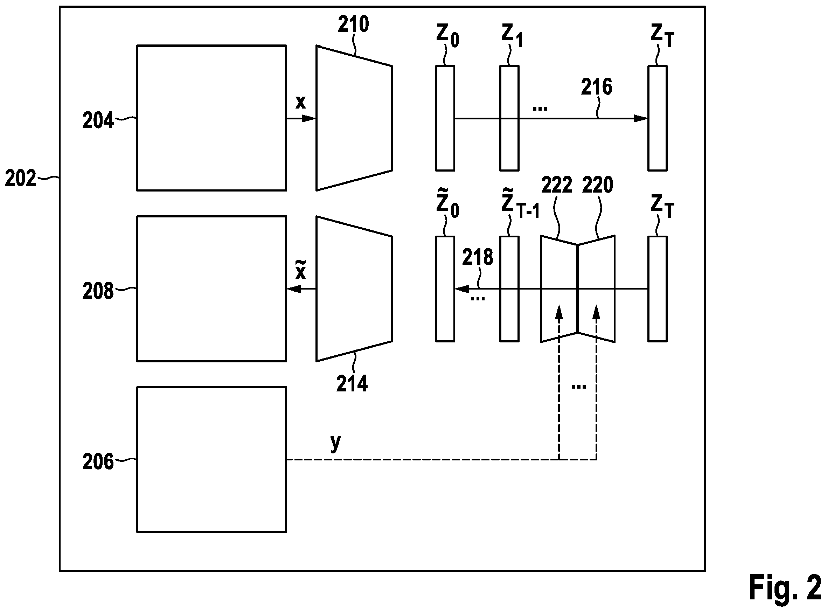

Figure 2 schematically depicts an exemplary diffusion model 202.

The diffusion model 202 is configured to receive a digital image x, e.g., a digital reference image 204, in an image space, and to determine an output *x̃*, e.g., a synthetic digital image 208, in the image space. The digital image x and/or the digital reference image 204 and/or the synthetic digital image 208 may be a video, radar, LiDAR, ultrasonic, motion, or thermal image. Optionally, the diffusion model 202 is configured to receive a condition y, e.g., a digital reference condition 206, and to determine the output *x̃* depending on the condition y and the digital image x.

The diffusion model 202 comprises an encoder 210 that is configured to encode the input x, e.g., the digital reference image 204, into a representation *Z*₀, e.g., of the digital reference image 204, in a latent space of the diffusion model.

The diffusion model 202 comprises a decoder 214 that is configured to decode a representation *Z̃*₀ ,e.g., of the synthetic digital image 208, in the latent space to the output *x̃*, e.g., the synthetic digital image 208, in the image space.

The image space in the example is a pixel space, e.g., for a RGB image comprising a width W, a height H and 3 channels. The image space may comprise more or less channels.

The diffusion model 202 is configured to successively add in a forward pass 216 random noise to the representation *Z*₀ in the latent space. In the example, the diffusion model according to the first embodiment 202 is configured to determine a sequence *Z*₁, ..., *Z_{T}* of representations, wherein after the first representation *Z*₀ a next representation *Z*_{*t*+1} in the sequence is determined depending on the result of adding random noise to the representation *Zₜ* preceding the next representation *Z*_{*t*+1} in the sequence of representations.

The diffusion model 202 is configured to successively remove in a denoising process 218 random noise from the last representation *Z_{T}* in the latent space. In the example, the exemplary diffusion model 202 is configured to determine a sequence *Z̃*_{*T*-1}, ..., *Z̃*₀ of outputs depending on the last representation *Z_{T}* as input to the denoising process. A first output *Z̃*_{*t=T*-1} in the sequence is determined in the example by denoising the input *Z_{T}.* After the first output *Z̃*_{*t=T*-1} a next output *Z̃*_{*t*-1} in the sequence is determined depending on the result of denoising the output *Z̃ₜ* preceding the next output *Z̃*_{*t*-1} in the sequence of outputs.

The diffusion model 202 is configured to determine the first output *Z̃*_{*t=T*-1} depending on a result of encoding the input *Z_{T}* with an encoder 220 and decoding the encoded input with a decoder 222.

The diffusion model 202 is configured to determine the respective next output *Z̃*_{*t*-1} depending on a result of encoding the output *Z̃ₜ* preceding the next output *Z̃*_{*t*-1} with an encoder and decoding the encoded input with a decoder.

A respective encoder is configured to determine features of the encoder at different levels of the encoder. A respective decoder is configured to determine features of the decoder at different levels of the decoder.

The diffusion model 202 is optionally configured to manipulate the features depending on the condition y. The diffusion model 202 is for example configured to manipulate the features of one encoder or multiple encoders or the features of one decoder or multiple decoders. The diffusion model 202 is for example configured to manipulate the features at at least one level or at different levels. The diffusion model 202 is for example configured to input the condition y to the encoder or decoder at the level or at the respective levels. According to the example, the features of a respective encoder are manipulated depending on the condition y only or depending on the condition y and the features of the same encoder. According to the example, the features of a respective decoder are manipulated depending on the condition y only or depending on the condition y and the features of the same decoder.

An example for the diffusion model is a stable diffusion model that operates in a latent space of an autoencoder.

Firstly, an encoder *ε*, i.e., the encoder 210, maps a given image x, e.g., the digital reference image 204, into a spatial latent code *Z*₀ *= E(x),* then *Z̃*₀ is mapped back to a prediction for the image *x̃*, e.g., the synthetic digital image 208, in the image space by a decoder D, i.e., the decoder 214. According to an example, the autoencoder is trained to reconstruct the given image, i.e., *x̃* = *D(E(x)).*

Secondly, the forward pass 216 and the denoising process 218 of the diffusion model are trained in the latent space.

The forward pass is a Markov chain to gradually add Gaussian noise to the spatial latent code *Z*₀: $q \left({z}_{t}\left|{z}_{t - 1}\right.\right) = N \left({z}_{t};\sqrt{1 - {β}_{t}}{z}_{t - 1},{β}_{t}I\right)$ where ${\left\{β\right\}}_{t = 0}^{T}$ are a fixed variance schedule. The noisy latent code *Z_{T}* is computed successively: ${Z}_{t} = \sqrt{{α}_{t}} {Z}_{0} + \sqrt{1 - {α}_{t}} ϵ$ where *ε~N*(0,*I*), where *Z*₀ *= E(x),* and ${α}_{t} : = {\prod }_{s}^{t} \left(1-{β}_{s}\right)$.

The reverse denoising process 218 is parametrized in the example by another Gaussian distribution ${p}_{θ} \left({z}_{t - 1}\left|{z}_{t}\right.\right) : = N \left({z}_{t - 1};{μ}_{θ}\left({z}_{t}, t\right),{σ}_{θ}\left({z}_{t}, t\right)\right)$

**Essentially** *µ_{θ}* (*zₜ, t*) is expressed as a linear combination of *zₜ* and predicted noise *ε*_{*θ*(}*_{zt},t*) which is modeled for example by the encoder and decoder that are configured to map the preceding output *zₜ* to the next output *z*_{*t*-1}.

In an example, the respective encoder and the respective decoder are implemented as a UNet. UNet is disclosed e.g., in Olaf Ronneberger, Philipp Fischer, Thomas Brox, U-Net: Convolutional Networks for Biomedical Image Segmentation, 18 May 2015, https://arxiv.org/abs/1505.04597.

The parameters of the encoder and decoder are learned in the example by minimizing the L2 norm of the noise prediction at a sampled timestep t: ${L}_{noise} = {E}_{z ∼ ε \left(x\right) , ϵ ∼ N \left(0, I\right) , t} \left[{\left‖ϵ-{ϵ}_{θ}\left({z}_{t}, t\right)\right‖}^{2}\right]$

In case the optional condition y is used, in the training, or after an initial training of the diffusion model, the modulation of the features depending on the condition y may be trained with a loss ${L}_{noise} = {E}_{z ∼ ε \left(x\right) , ϵ ∼ N \left(0, I\right) , t} \left[{\left‖ϵ-{ϵ}_{θ}\left({z}_{t}, t, y\right)\right‖}^{2}\right]$ that depends on the condition y.

The diffusion model 202 may be configured to control the features of at least one of the decoders. The diffusion model 202 may comprise a trainable copy of the encoder that precedes the decoder that is controlled. The diffusion model 202 may be configured to provide the condition y to a convolution, in particular a zero convolution, and to provide a result of adding the convolved condition to the preceding output *zₜ* as input to the trainable copy of the encoder. The diffusion model 202 may be configured to provide the output of the trainable copy of the encoder to a convolution, in particular a zero convolution. The diffusion model 202 may be configured to manipulate the features of the decoder at one level depending on the output of the convolution. The diffusion model 202 may be configured to propagate the output of the trainable copy of the encoder through a series of convolutions, in particular zero convolutions and manipulate the features of the decoder at different levels depending on the output of a respective convolution of the series. Propagate means for example, that the output of a convolution is used as input for a next convolution in the series.

Zero convolution in this context refers to a convolution that comprises parameters, weight and bias, that are initialized as zeros before training the diffusion model and that are learned in training. In the example, the zero convolution is a 1x1 convolution. Trainable copy of the encoder refers to an **encoder that** comprises parameters that are initialized before training of the trainable copy with the values of the parameters of the encoder. In training of the trainable copy, the parameters of the encoder are frozen, i.e., remain unchanged, and the parameters of the trainable copy are learned.

The output of the convolutions and the trainable copy of the encoder is for example integrated in the diffusion model 202 as ControlNet, wherein the features of the trainable copy of the encoder are manipulated.

The diffusion model 202 may be configured to modulate the features of the trainable copy in the same way as described for the encoder of the diffusion model 202.

According to an example, the layers for modulating the features, e.g., the SPADE blocks, are inserted at predetermined locations of the trainable copy, e.g., UNet, an modulate the features of the trainable copy as described for the modulation of the features in the diffusion model 202.

The features *f* may be manipulated depending on the condition y in different ways.

The according to a first exemplary modulation, a SPADE block takes the conditional input y and extracted features f from a level of the frozen diffusion network, and outputs spatially modulated features *f_{adp}*, e.g., as ${f}_{adp} = \frac{f - {μ}_{f}}{{γ}_{f}} γ \left(y\right) + μ \left(y\right)$ where *µ_{f}* is the mean and *γ_{f}* is the standard deviation of the extracted features *f,* and where *µ*(*y*) and *y(y)* are learned pixel-wise modulation parameters conditioned on the condition y. The SPADE block is for example configured as described in, Taesung Park, Ming-Yu Liu, Ting-Chun Wang, Jun-Yan Zhu, " Semantic Image Synthesis with Spatially-Adaptive Normalization ", 5 Nov 2019, https://arxiv.org/abs/1903.07291.

**According** to an example, the modulated features *f_{adp}* and the extracted features f are added to an output *fₒᵤₜ* that replaces the extracted features f at the original level, i.e., f ← *fₒᵤₜ = f_{adp}* + *f* .

The modulated features *f_{adp}* may be inserted to replace the extracted features f at the original level, i.e., f ← *fₒᵤₜ* = *f_{adp}*, or inserted at another level, e.g., a level that is after the original level in direction of the denoising process 218. The diffusion model 202 of the diffusion model may be configured to replace features f at a level with features *fₒᵤₜ = f +* tanh(*β*) *f_{adp}*, where *β* is a learnable factor and initialized e.g., as zero. This means, the modulated features *f_{adp}* are added to f in a learnable way.

The diffusion model 202 may comprise a sequence of a self-attention layer, a cross attention layer and a feed forward layer. According to a second exemplary modulation the features f are extracted from an output of the cross-attention layer of the diffusion model that follows after the self-attention layer of the diffusion model in direction of the denoising process 218, and provided as input to the SPADE block and as input to the feed forward layer of the diffusion model. The features are modulated depending on an output of the SPADE block as described for the first exemplary modulation.

The diffusion model 202 may comprise one or several of the parts for modulating features.

For example, SPADE blocks are inserted in parts of the diffusion model according to the first exemplary modulation or the second exemplary modulation at one predetermined location or at multiple predetermined locations of UNet or any other architecture of the diffusion model.

At inference time, the input *z_{T}* for the denoising process 218 is randomly sampled from the Gaussian distribution and the condition y is provided. Then the trained denoising encoder and decoder sets, e.g., the UNet, are sequentially applied, to obtain the denoised latent *z*_{*t*-1} given *zₜ* from to t = T to t = 1, while the features are manipulated depending on the condition y. The final synthesized image can be obtained by feeding the clean latent space code *Z̃*₀ through the decoder D: ${x}^{˜} = D \left({{Z}^{˜}}_{0}\right)$

**The diffusion** model 202 comprises trainable parameters.

A discriminator or discriminators may be used for training the diffusion model 202. The training may use explicit supervision of the condition y.

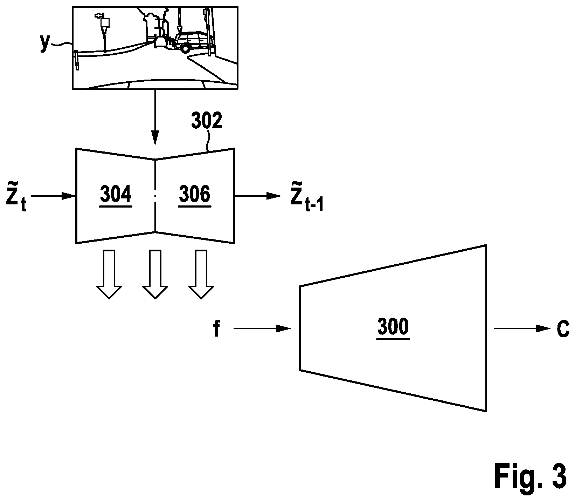

Figure 3 schematically depicts an exemplary feature-based discriminator 300 and a first denoising stage 302 for the diffusion model 202 that is configured to determine the respective next output *Z̃*_{*t*-1} depending on a result of encoding the output *Z̃ₜ* preceding the next output *Z̃*_{*t*-1} with an encoder 304 of the first denoising stage 302 and decoding the encoded input with a decoder 306 of the first denoising stage 302.

The first denoising stage 302 is configured to output features f of the encoder 304 and/or the decoder 306 of the first denoising stage 302 to the feature-based discriminator 300.

The first denoising stage 302 is configured to manipulate the features f in the encoder 304 and/or the decoder 306 of the first denoising stage 302 as described above and to output the manipulated features f to the feature-based discriminator 300.

The feature-based discriminator 300 is configured to map the features f that are provided to the feature-based discriminator 300 by the first denoising stage 302 to a class c, in particular either a class of a predetermined set of N classes for a real digital image or a class for a synthetic digital image. In the example, the feature-based discriminator 300 is configured to determine the class pixel-wise.

The first denoising stage 302 may be configured to output an attention map depending on the output *Z̃ₜ*. The feature-based discriminator 300 may be configured to map the attention map received from denoising stage 302 and the features f to the class c or the pixel-wise class c.

Using the condition y is optional. In an unconditional case, i.e., without input of the condition y to the first denoising stage 302, the feature-based discriminator 300 may be trained to minimize the loss ${L}_{seg} = - {\sum }_{i , j} log \left[{y}_{pred , i , j}\right] , {y}_{pred} = Dis \left({f}_{t}\right) , {y}_{pred} ∈ \left\{0, 1\right\}$ wherein *y_{preg}* is the prediction, *Dis(ft)* represents the mapping function of the feature-based discriminator 300, wherein i,j indicates a spatial location, the prediction *y_{preg}* = 0 represents a fake class and the prediction *y_{preg} =* 1 represents a real class, and *L_{seg}* represents the per-pixel binary cross-entropy loss with the ground truth label as 1 everywhere.

A loss for the conditional case, i.e., wherein the diffusion model 202 uses the condition y, e.g., an input map, is for example: $\begin{matrix}{L}_{seg} = CE \left(y, {y}_{pred}\right) = - {\sum }_{c = 1}^{N} {α}_{c} {\sum }_{i , j} {y}_{i , j} log {y}_{pred , i , j} , {y}_{pred} = Dis \left({f}_{t}\right) , {y}_{pred} \\ ∈ \left\{,…,N,N+1\right\}\end{matrix}$ ${α}_{c} = \frac{H \times W}{{\sum }_{i , j}^{H \times W} {E}_{y} \left[I\left[{y}_{i , j , c}=1\right]\right]}$ **where CE represents** the cross-entropy loss, wherein the prediction *y_{preg}* includes N real sematic classes (1,...,N) and 1 fake class (N + 1). Since the class frequency is usually imbalanced, the example comprises a class balancing weight *α_{c},* which for example is an inverse pixel-wise frequency of a class c per batch that depends on the height H, the width W and the expectancy value for the unit matrix I for the predictions *y*_{*i,j*,*c*} = 1 i.e., being real classes. During training, e.g., due to memory constraint, a limited number of images, e.g., 8 images, are sampled as batch per optimization step. For the limited number of 8 images, one training batch contains 8 images.

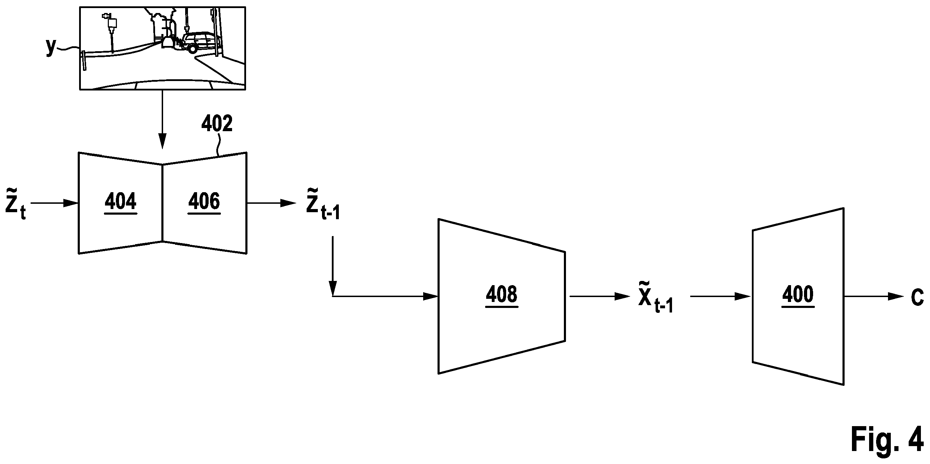

Figure 4 schematically depicts an exemplary image-based discriminator 400 and a second denoising stage 402 for the diffusion model 202 that is configured to determine the respective next output *Z̃*_{*t*-1} depending on a result of encoding the output *Z̃ₜ* preceding the next output *Z̃*_{*t*-1} with an encoder 404 of the second denoising stage 402 and decoding the encoded input with a first decoder 406 of the second denoising stage 402. The second denoising stage 402 is configured to provide the next output *Z̃*_{*t*-1} to a second decoder 408 of the second denoising stage 402 that is configured to map the next output *Z̃*_{*t*-1} to a digital image *x̃*_{*t*-1}.

The second denoising stage 402 is configured to manipulate the features f in the encoder 404 and/or the decoder 406 of the second denoising stage 402 as described above.

The image-based discriminator 400 is configured to map the next output *Z̃*_{*t*-1} that is provided to the image-based discriminator 400 by the second denoising stage 402 to a class c, in particular either a class of a predetermined set of N classes for a real digital image or a class for a synthetic digital image. In the example, the image-based discriminator 400 is configured to determine the class pixel-wise.

Using the condition y is optional. In an unconditional case, i.e., without input of the condition to the second denoising stage 402, the image-based discriminator 400 may be trained to minimize the loss ${L}_{seg} = - {\sum }_{i , j} log \left[{y}_{pred , i , j}\right] , {y}_{pred} = Dis \left({{x}^{˜}}_{t}\right) , {y}_{pred} ∈ \left\{0, 1\right\}$ wherein *Dis*(*x̃ₜ*) represents the mapping function of the image-based discriminator 400, wherein i,j indicates a spatial location, the prediction *y_{preg} =* 0 represents a fake class and the prediction *y_{preg}* = 1 represents a real class, and *L_{seg}* represents the per-pixel binary cross-entropy loss with the ground truth label as 1 everywhere.

The diffusion model 202 may comprise multiple first denoising stages 302 or multiple second denoising stages 402. The diffusion model 202 may comprise a first denoising stage 302 or multiple first denoising stages 302 and a second denoising stage 402 or multiple second denoising stages 402.

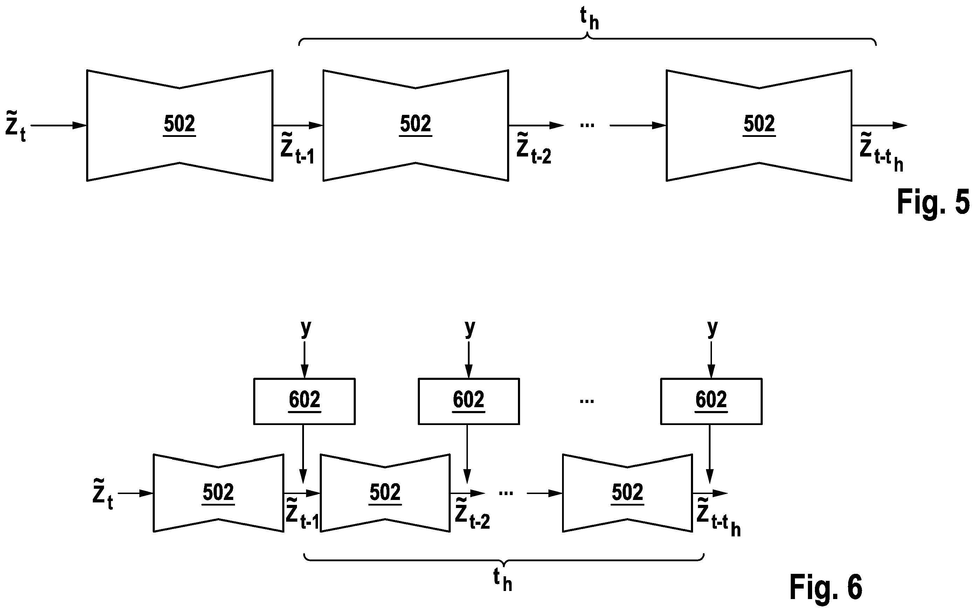

Figure 5 schematically depicts a sequence of denoising stages 502 that are arranged in the diffusion model 202 to successively remove noise from output *Z̃ₜ* at different steps t within a horizon *tₕ*. This means, the diffusion model 202 is configured to determine the sequence of outputs *Z̃*_{*t*-1}, *Z̃*_{*t*-2}, ..., *Z̃_{tₕ}* within the horizon *tₕ*.

For example, the diffusion model 202 is trained depending on a respective loss *L_{seg}* for the output *Z̃ₜ* and for the sequence of outputs *Z̃*_{*t*-1}, *Z̃*_{*t*-2}*,* ..., *Z̃_{tₕ}* and the loss *Lₙₒᵢₛₑ* for the output *Z̃ₜ*, e.g., with the loss $L = {L}_{noise} + λ {\sum }_{i} {L}_{seg , i} , i = t , … , t - 1 - {t}_{h}$ wherein *λ* is an optional weighting factor. To avoid memory explosion, only gradients of the first step t, i.e., *Lₙₒᵢₛₑ*, may be used, while the discriminator loss *L_{seg}* may be determined at the following steps *t -* 1, ..., *t -* 1 *- tₕ.*

Figure 6 schematically depicts the sequence of denoising stages 502 that are arranged in the diffusion model 202 to successively remove noise from output *Z̃ₜ*, depending on the condition y at different steps t within a horizon *tₕ*. The condition is in the example mapped with a layer 602 to a representation of the condition y that is added to the respective output in the sequence of outputs *Z̃*_{*t*-1}, *Z̃*_{*t*-2}, ..., *Z̃_{tₕ}.*

The layer 602 may be configured to map the condition y, e.g., the label map pixel-wise to determine a modified noise prediction: ${ϵ}_{mod}^{t} = \frac{{ϵ}_{θ}^{t} \left({z}_{t}, t, y\right) - {μ}_{ϵ}}{{γ}_{ϵ}} γ \left(y\right) + μ \left(y\right)$ where *µ_{ε}* is the mean and *γ_{ε}* is the standard deviation of the original noise prediction ${ϵ}_{θ}^{t}$ and *y(y)* and *µ*(*y*)are the learned modulation parameters conditioned on the input condition y.

A corresponding training strategy for the diffusion model 202 improves the synthesis quality and is particularly useful for the conditional diffusion model 202, i.e., the diffusion model 202 using the condition y to enhance the conditional alignment. The discriminator provides per-pixel guidance without using the condition or per-pixel conditional guidance when using the condition y. The multistep sampling of losses in the horizon during training further improves the training. Especially for the conditional case, i.e., when using the condition y, the inter-step conditioning strengthens the conditional effect.

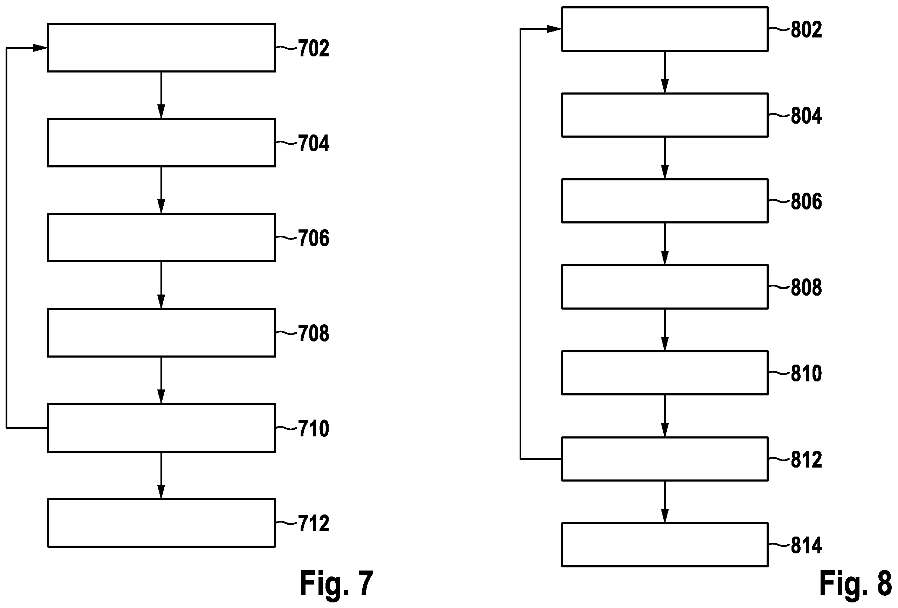

Figure 7 schematically depicts a flow chart of a first embodiment of a method for generating a synthetic digital image. According to the first embodiment, the diffusion model 202 is used for inference.

The method comprises a step 702.

The step 702 comprises providing a latent variable *Z_{T}* of the diffusion model 202 representing the synthetic digital image *x̃.*

The latent variable *Z_{T}* is sampled from random noise.

The inference may use the condition y or not.

In the conditional case, i.e., when the condition y is used, the step 702 comprises providing the condition y.

The condition y is for example the label map.

The method comprises a step 704.

The step 704 comprises mapping the latent variable *Z_{T}* with the diffusion model 202 depending on parameters of the diffusion model 202 to features f of the diffusion model 202.

The step 704 may comprise determining the sequence of outputs *Z*_{*T*-1}, *... Z*₀ comprising the output *Z*₀.

Determining the sequence of outputs *Z̃*_{*T*-1}, ... *Z̃*₀ may comprise determining a first output *Z̃*_{*T-*1} of the sequence depending on a result of encoding the input *Z_{T}* and decoding the encoded input, and successively determining a next output *Z̃*_{*T*-2}, ... *Z̃*₀ in the sequence depending on the result of encoding the output *Z̃*_{*T-*1}, ... *Z̃*₁ preceding the next output *Z̃*_{*T*-2}, ... *Z̃*₀ in the sequence and decoding the encoded output preceding the next output in the sequence.

Encoding or decoding may comprise determining the features f.

The step 704 comprises predicting a noise *εᵢ* in a next output *Z̃ᵢ* of the sequence *Z̃*_{*T*-2}, ... *Z̃*₀ depending on the output *Z̃*_{*T*-1}, ... *Z̃*₁ preceding the next output *Z̃*_{*i*-1} in the sequence of outputs *Z̃*_{*T*-1}, ... *Z̃*₀.

The method comprises a step 706.

The step 706 comprises mapping the features f with the diffusion model 202 depending on parameters of the diffusion model 202 to an output *Z*₀ of the diffusion model 202.

The step 706 may comprise modulating the features f depending on the condition y as described above and mapping the modulated features *f* with the diffusion model 202 to the output *Z*₀.

The output *Z*₀ may be in image space, i.e., pixel space, or in latent space.

The method may comprise a step 708 for mapping the output *Z*₀ in latent space to the synthetic digital image *x̃*.

The synthetic digital image *x̃* may comprise the output *Z*₀ in image space. This means, no decoder 214 is used.

For training, validation, or verification, the method may comprise a step 710.

The step 710 may comprise mapping the features f with the feature-based discriminator 300 to a class c.

The step 710 may comprise mapping the synthetic digital image *x̃* with the image-based discriminator 400 to the class c.

The class c is either a class of the predetermined set of N classes for the real digital image or the class for the fake digital image, i.e., recognition of a synthetic digital image *x̃*.

**The method** may comprise determining the class pixel-wise.

The step 710 may comprise determining the class c for a plurality of outputs of the sequence *Z*_{*T*-1}, ... *Z*₀ with a respective discriminator depending on features *f*_{*T*-1}, ... *f*₀ collected from the respective encoding or decoding.

The method comprises a step 712.

The step 712 comprises learning at least one parameter of the diffusion model 202 and/or of the feature-based discriminator 300 and/or of the image-based discriminator 400 depending on the loss *L_{Seg}.*

For the unconditional case, in the loss *L_{Seg}* the prediction *y_{pred}* = 0 represents a fake class and the prediction *y_{preg}* = 1 represents a real class. For the conditional case, in the loss *L_{Seg}* one prediction represents a fake class and N prediction represent true classes. For example, the prediction *y_{preg}* for N real sematic classes (1,...,N) and 1 fake class (N + 1) is used as described above.

This means, the loss *L_{Seq}* for the discriminator is defined depending on the class c and a predetermined reference class or the pixel-wise classes and pixel-wise reference classes.

In the conditional case, the condition y may comprise the predetermined reference class or the pixel-wise reference classes.

The step 712 may comprise learning the parameters depending on the losses *L_{Seg,i}* that are defined for the discriminators depending on the class c predicted by the respective discriminator and the predetermined reference class.

The step 712 may comprise learning the parameters depending the loss for noise *Lₙₒᵢₛₑ* and depending on the losses *L_{Seg}* that are defined for the discriminators.

The loss for noise *Lₙₒᵢₛₑ* is defined depending on the predicted noise *εᵢ* and a predetermined random noise, in particular random noise sampled from a Gaussian distribution.

**The loss** *L_{Seg}* that is defined for the discriminator or the losses *L_{Seg}* that are defined for the discriminators may be the loss *L_{Seg}* that is defined depending on the condition y.

The reference class may be provided pixel-wise.

The method may comprise learning the at least one parameter depending on the loss that is defined depending on the pixel-wise classes and respective predetermined pixel-wise reference classes.

The steps 702 to 710 may be repeated to determine a batch of training data for learning the parameters. The step 712 may comprise learning the parameters e.g., with a gradient descent based on the batch of training data.

Figure 8 schematically depicts a flow chart of a second embodiment of the method for generating a synthetic digital image. According to the second embodiment, the diffusion model 202 is configured to process a digital image as input x, i.e., without the encoder 210.

The method according to the second embodiment comprises a step 802.

The step 802 comprises providing a digital reference image 204.

The method according to the second embodiment comprises a step 804.

The step 804 comprises adding noise with the diffusion model 202 to the input x, i.e., the digital reference image 204 to determine the latent variable *Z_{T}*.

The method according to the second embodiment comprises a step 806.

The step 806 comprises mapping the latent variable *Z_{T}* as described in step 704.

The step 806 may comprise determining the sequence of outputs *Z*_{*T*-1}, ... *Z*₀ as described in step 704, wherein encoding or decoding may comprise determining the features f.

**The step 806** may comprise predicting the noise *εᵢ* as describe in step 704.

According to the second embodiment, the method comprises a step 808.

The step 808 comprises mapping the features f with the diffusion model 202 as described in step 706.

The step 808 may comprise modulating the features f depending on the condition y as described in step 706.

The output *Z*₀ may be in image space, i.e., pixel space, or in latent space.

The method according to the second embodiment may comprise a step 810 for mapping the output *Z*₀ in latent space to the synthetic digital image *x̃*.

The synthetic digital image *x̃* may comprise the output *Z*₀ in image space. This means, no decoder 214 is used.

For training, validation, or verification, the method according to the second embodiment may comprise a step 812.

The step 812 may comprise mapping the features f with the feature-based discriminator 300 to the class c.

The step 812 may comprise mapping the synthetic digital image *x̃* with the image-based discriminator 400 to the class c.

The method according to the second embodiment may comprise determining the class pixel-wise.

The step 812 may comprise determining the class c for a plurality of outputs of the sequence *Z*_{*T*-1}, ... *Z*₀ with a respective discriminator depending on features *f*_{*T*-1}, ... *f*₀ collected from the respective encoding or decoding.

The method according to the second embodiment comprises a step 814.

The step 814 comprises learning at least one parameter of the diffusion model 202 and/or of the feature-based discriminator 300 and/or of the image-based discriminator 400 as described in step 712.

The steps 802 to 812 may be repeated to determine a batch of training data for learning the parameters. The step 814 may comprise learning the parameters e.g., with a gradient descent based on the batch of training data

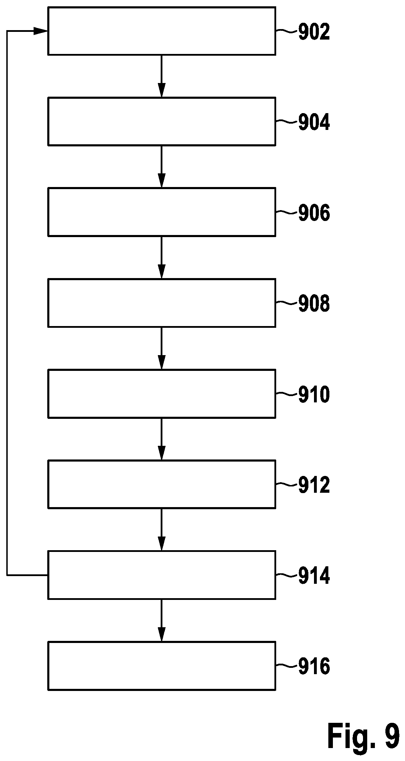

Figure 9 schematically depicts a flow chart of a third embodiment of the method for generating a synthetic digital image.

According to the third embodiment, the diffusion model comprises the encoder 210 for mapping a digital image to an input x.

According to the third embodiment, the method comprises a step 902.

The step 902 comprises providing the digital reference image 204.

**According** to the third embodiment, the method comprises a step 904.

The step 904 comprises mapping the digital reference image 204 with the encoder 210 to the input x of the diffusion model 202.

According to the third embodiment, the method comprises a step 906.

The step 906 comprises adding noise with the diffusion model 202 to the input x to determine the latent variable *Z_{T}*.

According to the third embodiment, the method comprises a step 908.

The step 908 comprises mapping the latent variable *Z_{T}* as described in step 704.

The step 908 may comprise determining the sequence of outputs *Z*_{*T*-1}, ... *Z*₀ as described in step 704, wherein encoding or decoding may comprise determining the features f.

**The step 908** may comprise predicting the noise *εᵢ* as describe in step 704.

According to the third embodiment, the method comprises a step 910.

The step 910 comprises mapping the features f with the diffusion model 202 as described in step 706.

The step 910 may comprise modulating the features f depending on the condition y as described in step 706.

The output *Z*₀ may be in image space, i.e., pixel space, or in latent space.

The method according to the third embodiment may comprise a step 912 for mapping the output *Z*₀ in latent space to the synthetic digital image *x̃*.

The synthetic digital image *x̃* may comprise the output *Z*₀ in image space. This means, no decoder 214 is used.

For training, validation, or verification, the method according to the third embodiment may comprise a step 914.

The step 914 may comprise mapping the features f with the feature-based discriminator 300 to the class c.

The step 914 may comprise mapping the synthetic digital image *x̃* with the image-based discriminator 400 to the class c.

The method according to the third embodiment may comprise determining the class pixel-wise.

The step 914 may comprise determining the class c for a plurality of outputs of the sequence *Z*_{*T*-1}, ... *Z*₀ with a respective discriminator depending on features *f*_{*T*-1}, ... *f*₀ collected from the respective encoding or decoding.

The method according to the third embodiment comprises a step 916.

The step 916 comprises learning at least one parameter of the diffusion model 202 and/or of the feature-based discriminator 300 and/or of the image-based discriminator 400 as described in step 712.

The steps 902 to 914 may be repeated to determine a batch of training data for learning the parameters. The step 916 may comprise learning the parameters e.g., with a gradient descent based on the batch of training data

The method for generating synthetic images as described above may be used for providing a machine learning system. The machine learning system may comprise a neural network for semantic segmentation, object recognition, or classification of objects.

An exemplary computer-implemented method for providing the machine learning system comprises generating a synthetic digital image with the method for generating the synthetic digital image, and training, testing, verifying, or validating the machine learning system depending on the synthetic digital image.

Preferably a plurality of synthetic digital images are determined and the machine learning system is trained, tested, verified or validated depending on the plurality of synthetic digital images.

Depending on the purpose or type of machine learning system that shall be provided, the machine learning system is trained, tested, verified, or validated for semantic segmentation, or object recognition, or classification of objects.

Preferably, the machine learning system is trained, tested, verified, or validated for recognizing background or an object, in particular a traffic sign, a road surface, a pedestrian, a vehicle, an animal, a plant, infrastructure, or the sky, depending on the synthetic digital image.

Training, testing, verifying, or validating the machine learning system may comprise providing the condition y, in particular the label map, that is provided for generating the synthetic digital image as ground truth for training, testing, verifying, or validating the machine learning system.

The diffusion model may be a generative model or part of a generative model to generate training and/or test data for a machine learning system or training and/or test data for an image classifier.

This means, a computer-implemented method for generating the synthetic digital image *x̃* with the diffusion model for generating training and/or test data for training a machine learning system or an image classifier comprises sampling an input *Z_{T}* from a probability distribution, in particular a Gaussian distribution, providing the condition y for the semantic layout of the synthetic digital image *x̃*, in text, a class label, a semantic label map, a two-dimensional or a three dimensional pose, or a depth map, and mapping the input *Z_{T}* with the diffusion model to the output *x̃ or Z̃*₀ of the diffusion model, e.g., as described in step 608.

The synthetic digital image *x̃* may comprise the output *x̃* of the diffusion model, or the synthetic digital image *x̃* is generated depending on the output *Z̃*₀ of the diffusion model.

The diffusion model is the generative model or part of the generative model to generate training and/or test data for a machine learning system or training and/or test data for an image classifier. The diffusion model comprises the successive levels.

Mapping the input *Z_{T}* with the diffusion model to the output *x̃ or Z̃*₀ may comprise successively determining features *f* at the levels depending on the input *Z_{T},* inputting the condition y to the diffusion model at at least one level of the levels, modulating the features f of at least one level of the levels depending on the condition y, and determining the output *Z̃*₀ of the diffusion model depending on the modulated features.

An exemplary computer-implemented method for operating the technical system 112 comprises providing the machine learning system with the method for providing the machine learning system, capturing a digital image with the sensor 108, and determining the control signal for operating the technical system 112 with the machine learning system depending on the digital image.

The methods comprises a generic training paradigm to improve the synthesis quality of the diffusion models, which is particularly useful for conditional diffusion models and improve the conditional alignment. The methods can improve the training of both unconditional and conditional diffusion models, and is independent of the architecture design of the diffusion models. The diffusion model may comprise a denoising model for the denoising process 218, which can be a UNet or a transformer-based model in the pixel space or in the latent space. For instance, the methods can be applied to improve ControlNet, FreestyleNet, despite they have different designs of the denoising model with conditions. By employing the methods, the synthesized digital images are better aligned with the conditions, e.g., the label map. This is beneficial for downstream applications, since the condition to the generative models will be used as the ground-truth label during training of the downstream task. For instance, when using the synthetic data for augmenting the training of a semantic segmentation network, the label map of the generative model may be reused as the ground-truth label to train the semantic segmentation network. If the synthesized images are not aligned with the conditional inputs, the mismatching will mislead the network training because the ground-truth label is no longer correct anymore.

## Claims

1. Computer-implemented method for generating a synthetic digital image, in particular for generating training and/or test data for training a machine learning system or for training an image classifier, wherein the method comprises providing a latent variable (*Z_{T}*) of a diffusion model (202) representing the synthetic digital image (*x̃*), wherein providing the latent variable (*Z_{T}*) comprises sampling (702) the latent variable (*Z_{T}*) from random noise, or providing (802, 902) a digital reference image, and adding (804) noise with the diffusion model (202) to the digital reference image (204) to determine the latent variable (*Z_{T}*), or mapping (904) the digital reference image (204) with an encoder (210) to an input (x) of the diffusion model (202), and adding (906) noise with the diffusion model (202) to the input (x) to determine the latent variable (*Z_{T}*), wherein the method further comprises mapping (704, 806, 908) the latent variable (*Z_{T}*) with the diffusion model (202) depending on parameters of the diffusion model (202) to features (f) of the diffusion model (202), mapping (706, 808, 910) the features (f) with the diffusion model (202) depending on parameters of the diffusion model (202) to an output (*Z*₀) of the diffusion model (202), wherein the synthetic digital image (*x̃*) comprises the output, or wherein the method comprises mapping (708, 810, 912) the output (*Z*₀) with a decoder to the synthetic digital image (*x̃*), mapping (710, 812, 914) the features (f) with a feature-based discriminator (300) to a class (c), in particular either a class (c) of a predetermined set of classes for a real digital image or a class for a synthetic digital image (*x̃*), depending on parameters of the discriminator, and learning (712, 814, 916) at least one parameter of the diffusion model (202) and/or the feature based discriminator (300) depending on a loss for the feature based discriminator (300) that is defined depending on the class and a predetermined reference class, wherein the method comprises determining (704, 806, 908) a sequence of outputs (*Z̃*_{*T-*1}, ... *Z̃*₀) comprising the output (*Z̃*₀), wherein determining the sequence of outputs (*Z̃*_{*T-*1}, ... *Z̃*₀) comprises determining a first output (*Z̃*_{*T*-1}) of the sequence depending on a result of encoding the input (*Z_{T}*) and decoding the encoded input, and successively determining a next output (*Z̃*_{*T*-2}, ... *Z̃*₀) in the sequence depending on the result of encoding the output (*Z̃*_{*T-*1}, ... *Z̃*₁) preceding the next output (*Z̃*_{*T*-2}, ... *Z̃*₀) in the sequence and decoding the encoded output preceding the next output in the sequence, wherein a first denoising stage (302) of the diffusion model (202) determines a respective next output (*Z̃*_{*t*-1}) depending on a result of encoding the output (*Z̃ₜ*) preceding the next output (*Z̃*_{*t*-1}) with an encoder (304) of the first denoising stage (302) and decoding the encoded input with a decoder (306) of the first denoising stage (302), and outputting the features (f) of the encoder (304) of the first denoising stage (302) to the feature-based discriminator (300), wherein encoding with the encoder (304) comprises determining the features (f), or outputting the features (f) of the decoder (306) of the first denoising stage (302) to the feature-based discriminator (300), wherein decoding comprises determining the features (f).

2. The method according to claim 1, **characterized in that** the synthetic digital image comprises pixels, wherein the method comprises determining (710, 812, 914) the class pixel-wise, and learning (712, 814, 916) the at least one parameter depending on a loss that defined depending on the pixel-wise classes and respective predetermined pixel-wise reference classes.

3. The method according to claim 1, **characterized in that** the method comprises determining (710, 812, 914), with a respective feature based discriminator, the class for a plurality of outputs of the sequence (*Z̃*_{*T*-1}, ... *Z̃*₀) depending on features collected from the respective encoding, and learning (712, 814, 918) the parameters depending on the losses that are defined for the feature based discriminators depending on the class predicted by the respective feature based discriminator and the predetermined reference class.

4. The method according to claim 3, **characterized in that** the method comprises predicting (704, 806, 908) a noise (*εi*) in a next output (*Zᵢ*) of the sequence (*Z̃*_{*T*-2}, ... *Z̃*₀) depending on the output (*Z̃*_{*T*-1}, ... *Z̃*₁) preceding the next output (*Z̃*_{*i*-1}) in the sequence of outputs (*Z̃*_{*T*-1}, ... *Z̃*₀), and learning (712, 814, 918) the parameters depending a loss for noise and depending on the losses that are defined for the feature based discriminators, wherein the loss for noise is defined depending on the predicted noise and a predetermined random noise, in particular random noise sampled from a Gaussian distribution.

5. The method according one of the preceding claims, **characterized by** providing (702, 804, 906) a condition (y), in particular a label map, modulating the features *(f)* depending on the condition (y) and mapping the modulated features (f) with the diffusion model (202) to the output (*Z*₀), and/or with the discriminator to the class.

6. The method according to claim 5, **characterized in that** the method comprises learning (712, 814, 918) the parameters depending on the loss that is defined for the feature based discriminator, wherein the loss that is defined for the feature based discriminator is defined depending on the condition (y), or learning (712, 814, 918) the parameters depending on the losses that are defined for the feature based discriminators, wherein the losses are defined depending on the condition (y).

7. The method according to claim 5 or 6, **characterized in that** the condition (y) comprises the predetermined reference class or the pixel-wise reference classes.

8. Computer-implemented method for providing a machine learning system, in particular a neural network for semantic segmentation, object recognition, or classification of objects, **characterized in that** the method comprises generating a synthetic digital image with the method according to one of the preceding claims, and training, testing, verifying, or validating the machine learning system for semantic segmentation, or object recognition, or classification of objects, preferably for recognizing background or an object, in particular a traffic sign, a road surface, a pedestrian, a vehicle, an animal, a plant, infrastructure, or the sky, depending on the synthetic digital image.

9. The method according to claim 8, **characterized in that** training, testing, verifying, or validating the machine learning system comprises providing the condition (y), in particular the label map, that is provided for generating the synthetic digital image as ground truth for training, testing, verifying, or validating the machine learning system.

10. Computer-implemented method for operating a technical system (112), in particular a computer-controlled machine, preferably a robotic system, a vehicle, a domestic appliance, a power tool, a manufacturing machine, a personal assistant or an access control system, **characterized in that** the method comprises providing the machine learning system with the method according to claim 8 or 9, capturing a digital image with a sensor (108), in particular a video, radar, LiDAR, ultrasonic, motion, or thermal image, and determining a control signal for operating the technical system (112) with the machine learning system depending on the digital image.

11. A device (100), **characterized in that** the device (100) comprises at least one processor (102) and at least one memory (104), wherein the at least one processor (102) is configured to execute instructions that, when executed by the at least one processor, (102) cause the device (100) to execute the method according to one of the preceding claims, wherein the at least one memory (104) is configured to store the instructions.

12. A computer program, **characterized in that** the computer program comprises computer-readable instructions that, when executed by a computer, cause the computer to execute the method according to one of the claims 1 to 10.

## Patentansprüche

1. Computer-implementiertes Verfahren zum Erzeugen eines synthetischen digitalen Bildes, insbesondere zum Erzeugen von Trainings- und/oder Testdaten zum Trainieren eines maschinellen Lernsystems oder zum Trainieren eines Bildklassifikators, wobei das Verfahren das Bereitstellen einer latenten Variablen (Z_{T}) eines Diffusionsmodells (202), welches das synthetische digitale Bild (*x̃*) repräsentiert, umfasst, wobei das Bereitstellen der latenten Variablen (Z_{T}) das Abtasten (702) der latenten Variablen (Z_{T}) von Zufallsrauschen umfasst, oder das Bereitstellen (802, 902) eines digitalen Referenzbildes und Addieren (804) von Rauschen mit dem Diffusionsmodell (202) zu dem digitalen Referenzbild (204), um die latente Variable (Z_{T}) zu bestimmen, oder das Abbilden (904) des digitalen Referenzbildes (204) mit einem Encoder (210) auf einen Eingang (x) des Diffusionsmodells (202) und das Addieren (906) von Rauschen mit dem Diffusionsmodell (202) zu dem Eingang (x), um die latente Variable (Z_{T}) zu bestimmen, wobei das Verfahren ferner das Abbilden (704, 806, 908) der latenten Variablen (Z_{T}) mit dem Diffusionsmodell (202) in Abhängigkeit von Parametern des Diffusionsmodells (202) auf Merkmale (*f*) des Diffusionsmodells (202) umfasst, das Abbilden (706, 808, 910) der Merkmale (*f*) mit dem Diffusionsmodell (202) in Abhängigkeit von Parametern des Diffusionsmodells (202) auf einen Ausgang (Z₀) des Diffusionsmodells (202), wobei das synthetische digitale Bild (*x̃*) den Ausgang umfasst, oder wobei das Verfahren das Abbilden (708, 810, 912) des Ausgangs (Z₀) mit einem Decoder auf das synthetische digitale Bild (*x̃*) umfasst, das Abbilden (710, 812, 914) der Merkmale (*f*) mit einem merkmalsbasierten Diskriminator (300) auf eine Klasse (c), insbesondere entweder eine Klasse (c) einer vorbestimmten Menge von Klassen für ein reales digitales Bild oder eine Klasse für ein synthetisches digitales Bild (*x̃*), in Abhängigkeit von Parametern des Diskriminators, und das Lernen (712, 814, 916) mindestens eines Parameters des Diffusionsmodells (202) und/oder des merkmalsbasierten Diskriminators (300) in Abhängigkeit von einem Verlust für den merkmalsbasierten Diskriminator (300), der in Abhängigkeit von der Klasse und einer vorbestimmten Referenzklasse definiert ist, wobei das Verfahren das Bestimmen (704, 806, 908) einer Folge von Ausgängen (*Z̃*_{*T*-1}, ... *Z̃*₀) umfasst, die den Ausgang (*Z̃*₀) umfasst, wobei das Bestimmen der Folge von Ausgängen (*Z̃*_{*T*-1}, ... *Z̃*₀) das Bestimmen eines ersten Ausgangs (*Z̃*_{*T*-1}) der Folge in Abhängigkeit von einem Ergebnis des Codierens des Eingangs (Z_{T}) und Decodierens des codierten Eingangs umfasst, und das sukzessive Bestimmen eines nächsten Ausgangs (*Z̃*_{*T*-2}, ... *Z̃*₀) in der Folge in Abhängigkeit vom Ergebnis des Codierens des Ausgangs (*Z̃*_{*T*-1}, ... *Z̃*₁), der dem nächsten Ausgang (*Z̃*_{*T*-2}, ... *Z̃*₀) in der Folge vorangeht, und des Decodierens des codierten Ausgangs, der dem nächsten Ausgang in der Folge vorangeht, wobei eine erste Denoising-Stufe (302) des Diffusionsmodells (202) einen jeweiligen nächsten Ausgang (*Z̃*_{*t*-1}) in Abhängigkeit von einem Ergebnis des Codierens des Ausgangs (*Z̃ₜ*), der dem nächsten Ausgang (*Z̃*_{*t*-1}) vorangeht, mit einem Encoder (304) der ersten Denoising-Stufe (302) und des Decodierens des codierten Eingangs mit einem Decoder (306) der ersten Denoising-Stufe (302) bestimmt, und das Ausgeben der Merkmale (*f*) des Encoders (304) der ersten Denoising-Stufe (302) an den merkmalsbasierten Diskriminator (300), wobei das Codieren mit dem Encoder (304) das Bestimmen der Merkmale (*f*) umfasst, oder das Ausgeben der Merkmale (*f*) des Decoders (306) der ersten Denoising-Stufe (302) an den merkmalsbasierten Diskriminator (300), wobei das Decodieren das Bestimmen der Merkmale (*f*) umfasst.

2. Verfahren nach Anspruch 1, **dadurch gekennzeichnet, dass** das synthetische digitale Bild Pixel umfasst, wobei das Verfahren das pixelweise Bestimmen (710, 812, 914) der Klasse umfasst, und das Lernen (712, 814, 916) des mindestens einen Parameters in Abhängigkeit von einem Verlust, der in Abhängigkeit von den pixelweisen Klassen und jeweiligen vorbestimmten pixelweisen Referenzklassen definiert ist.

3. Verfahren nach Anspruch 1, **dadurch gekennzeichnet, dass** das Verfahren das Bestimmen (710, 812, 914), mit einem jeweiligen merkmalsbasierten Diskriminator, der Klasse für eine Mehrzahl von Ausgängen der Folge (*Z̃*_{*T*-1}, ... *Z̃*₀) in Abhängigkeit von Merkmalen umfasst, die aus der jeweiligen Codierung erfasst wurden, und das Lernen (712, 814, 918) der Parameter in Abhängigkeit von den Verlusten, die für die merkmalsbasierten Diskriminatoren in Abhängigkeit von der Klasse definiert sind, die durch den jeweiligen merkmalsbasierten Diskriminator und die vorbestimmte Referenzklasse vorhergesagt wird.

4. Verfahren nach Anspruch 3, **dadurch gekennzeichnet, dass** das Verfahren das Vorhersagen (704, 806, 908) eines Rauschens (*εₜ*) in einem nächsten Ausgang (Zᵢ) der Folge (*Z̃*_{*T*-2}, ... *Z̃*₀) in Abhängigkeit von dem Ausgang (*Z̃*_{*T*-1}, ... *Z̃*₁), der dem nächsten Ausgang (*Z̃*_{*i*-1}) in der Folge von Ausgängen (*Z̃*_{*T*-1}, ... *Z̃*₀) vorangeht, umfasst, und das Lernen (712, 814, 918) der Parameter in Abhängigkeit von einem Verlust für Rauschen und in Abhängigkeit von den Verlusten, die für die merkmalsbasierten Diskriminatoren definiert sind, wobei der Verlust für Rauschen in Abhängigkeit von dem vorhergesagten Rauschen und einem vorbestimmten Zufallsrauschen, insbesondere einem von einer Gaußschen Verteilung abgetasteten Zufallsrauschen, definiert ist.

5. Verfahren nach einem der vorhergehenden Ansprüche, **gekennzeichnet durch** Bereitstellen (702, 804, 906) einer Bedingung (y), insbesondere einer Label-Map, Modulieren der Merkmale (*f*) in Abhängigkeit von der Bedingung (y) und Abbilden der modulierten Merkmale (*f*) mit dem Diffusionsmodell (202) auf den Ausgang (Z₀) und/oder mit dem Diskriminator auf die Klasse.

6. Verfahren nach Anspruch 5, **dadurch gekennzeichnet, dass** das Verfahren das Lernen (712, 814, 918) der Parameter in Abhängigkeit von dem Verlust umfasst, der für den merkmalsbasierten Diskriminator definiert ist, wobei der Verlust, der für den merkmalsbasierten Diskriminator definiert ist, in Abhängigkeit von der Bedingung (y) definiert ist, oder das Lernen (712, 814, 918) der Parameter in Abhängigkeit von den Verlusten, die für die merkmalsbasierten Diskriminatoren definiert sind, wobei die Verluste in Abhängigkeit von der Bedingung (y) definiert sind.

7. Verfahren nach Anspruch 5 oder 6, **dadurch gekennzeichnet, dass** die Bedingung (y) die vorbestimmte Referenzklasse oder die pixelweisen Referenzklassen umfasst.

8. Computer-implementiertes Verfahren zum Bereitstellen eines maschinellen Lernsystems, insbesondere eines neuronalen Netzes für semantische Segmentierung, Objekterkennung oder Klassifikation von Objekten, **dadurch gekennzeichnet, dass** das Verfahren das Erzeugen eines synthetischen digitalen Bildes mit dem Verfahren nach einem der vorhergehenden Ansprüche umfasst, und das Trainieren, Testen, Überprüfen oder Validieren des maschinellen Lernsystems für semantische Segmentierung oder Objekterkennung oder Klassifikation von Objekten, vorzugsweise zum Erkennen von Hintergrund oder eines Objekts, insbesondere eines Verkehrszeichens, einer Fahrbahnoberfläche, eines Fußgängers, eines Fahrzeugs, eines Tieres, einer Pflanze, von Infrastruktur oder des Himmels, in Abhängigkeit von dem synthetischen digitalen Bild.

9. Verfahren nach Anspruch 8, **dadurch gekennzeichnet, dass** das Trainieren, Testen, Überprüfen oder Validieren des maschinellen Lernsystems das Bereitstellen der Bedingung (y), insbesondere der Label-Map, umfasst, welche für das Erzeugen des synthetischen digitalen Bildes als Grundwahrheit für das Trainieren, Testen, Überprüfen oder Validieren des maschinellen Lernsystems vorgesehen ist.

10. Computer-implementiertes Verfahren zum Betreiben eines technischen Systems (112), insbesondere einer computergesteuerten Maschine, vorzugsweise eines Robotersystems, eines Fahrzeugs, eines Haushaltgerätes, eines Elektrowerkzeugs, einer Fertigungsmaschine, eines persönlichen Assistenten oder eines Zugangskontrollsystems, **dadurch gekennzeichnet, dass** das Verfahren das Bereitstellen des maschinellen Lernsystems mit dem Verfahren nach Anspruch 8 oder 9, das Erfassen eines digitalen Bildes mit einem Sensor (108), insbesondere eines Video-, Radar-, LiDAR-, Ultraschall-, Bewegungs- oder Wärmebildes, und das Bestimmen eines Steuersignals zum Betreiben des technischen Systems (112) mit dem maschinellen Lernsystem in Abhängigkeit von dem digitalen Bild umfasst.

11. Vorrichtung (100), **dadurch gekennzeichnet, dass** die Vorrichtung (100) mindestens einen Prozessor (102) und mindestens einen Speicher (104) umfasst, wobei der mindestens eine Prozessor (102) dafür ausgelegt ist, Anweisungen auszuführen, die, wenn sie von dem mindestens einen Prozessor (102) ausgeführt werden, die Vorrichtung (100) veranlassen, das Verfahren nach einem der vorhergehenden Ansprüche auszuführen, wobei der mindestens eine Speicher (104) dafür ausgelegt ist, die Anweisungen zu speichern.

12. Computerprogramm, **dadurch gekennzeichnet, dass** das Computerprogramm computerlesbare Anweisungen umfasst, die, wenn sie von einem Computer ausgeführt werden, den Computer veranlassen, das Verfahren nach einem der Ansprüche 1 bis 10 auszuführen.

## Revendications

1. Procédé mis en œuvre par ordinateur pour générer une image numérique synthétique, en particulier pour générer des données d'entraînement et/ou de test destinées à l'entraînement d'un système d'apprentissage automatique ou à l'entraînement d'un classificateur d'images, le procédé comprenant la fourniture d'une variable latente (Z_{T}) d'un modèle de diffusion (202) représentant l'image numérique synthétique (*x̃*), la fourniture de la variable latente (Z_{T}) comprenant l'échantillonnage (702) de la variable latente (Z_{T}) à partir d'un bruit aléatoire, ou la fourniture (802, 902) d'une image numérique de référence, et l'ajout (804) de bruit avec le modèle de diffusion (202) à l'image numérique de référence (204) afin de déterminer la variable latente (Z_{T}), ou le mappage (904) de l'image numérique de référence (204) avec un codeur (210) vers une entrée (x) du modèle de diffusion (202), et l'ajout (906) du bruit à l'entrée (x) avec le modèle de diffusion (202) afin de déterminer la variable latente (Z_{T}), le procédé comprenant en outre le mappage (704, 806, 908) de la variable latente (Z_{T}) avec le modèle de diffusion (202), en fonction de paramètres du modèle de diffusion (202), vers des caractéristiques (*f*) du modèle de diffusion (202), le mappage (706, 808, 910) des caractéristiques (*f*) avec le modèle de diffusion (202), en fonction de paramètres du modèle (202), vers une sortie (Z₀) du modèle de diffusion (202), l'image numérique synthétique (*x̃*) comprenant la sortie, ou le procédé comprenant le mappage (708, 810, 912) de la sortie (Z₀) avec un décodeur vers l'image numérique synthétique (*x̃*), le mappage (710, 812, 914) des caractéristiques (*f*) avec un discriminateur (300) basé sur des caractéristiques vers une classe (c), en particulier soit une classe (c) d'un ensemble prédéterminé de classes pour une image numérique réelle, soit une classe pour une image numérique synthétique (*x̃*), en fonction de paramètres du discriminateur, et l'apprentissage (712, 814, 916) d'au moins un paramètre du modèle de diffusion (202) et/ou du discriminateur (300) basé sur des caractéristiques en fonction d'une perte pour le discriminateur (300) basé sur des caractéristiques qui est définie en fonction de la classe et d'une classe de référence prédéterminée, le procédé comprenant la détermination (704, 806, 908) d'une séquence de sorties (*Z̃*_{*T*-1}, ... *Z̃*₀) comprenant la sortie (*Z̃*₀), la détermination de la séquence de sorties (*Z̃*_{*T*-1}, ... *Z̃*₀) comprenant la détermination d'une première sortie (*Z̃*_{*T*-1}) de la séquence en fonction d'un résultat d'encodage de l'entrée (Z_{T}) et le décodage de l'entrée encodée, et la détermination, de manière successive, d'une sortie suivante (*Z̃*_{*T*-2}, ... *Z̃*₀) dans la séquence en fonction du résultat du codage de la sortie (*Z̃*_{*T*-1}, ... *Z̃*₁) précédant la sortie suivante (*Z̃*_{*T*-2}, ... *Z̃*₀) dans la séquence et le décodage de la sortie codée précédant la sortie suivante dans la séquence, dans lequel un premier étage de débruitage (302) du modèle de diffusion (202) détermine une sortie suivante respective (*Z̃*_{*t*-1}) en fonction du résultat du codage de la sortie (*Z̃ₜ*) précédant la sortie suivante (*Z̃*_{*t*-1}) avec un codeur (304) du premier étage de débruitage (302) et du décodage de l'entrée codée avec un décodeur (306) du premier étage de débruitage (302), et en émettant en sortie les caractéristiques (*f*) du codeur (304) du premier étage de débruitage (302) à destination du discriminateur (300) basé sur des caractéristiques, le codage avec le codeur (304) comprenant la détermination des caractéristiques (*f*), ou en émettant en sortie les caractéristiques (*f*) du décodeur (306) du premier étage de débruitage (302) à destination du discriminateur (300) basé sur des caractéristiques, le décodage comprenant la détermination des caractéristiques (*f*).

2. Procédé selon la revendication 1, **caractérisé en ce que** l'image numérique synthétique comprend des pixels, le procédé comprenant la détermination (710, 812, 914) de la classe pixel par pixel, et l'apprentissage (712, 814, 916) dudit au moins un paramètre en fonction d'une perte qui est définie en fonction des classes pixel par pixel et des classes de référence pixel par pixel prédéterminées respectives.

3. Procédé selon la revendication 1, **caractérisé en ce que** le procédé comprend la détermination (710, 812, 914), avec un discriminateur basé sur des caractéristiques respectif, de la classe pour une pluralité de sorties de la séquence (*Z̃*_{*T*-1}, ... *Z̃*₀) en fonction de caractéristiques collectées à partir du codage respectif, et l'apprentissage (712, 814, 918) des paramètres en fonction des pertes qui sont définies pour les discriminateurs basés sur les caractéristiques, en fonction de la classe prédite par le discriminateur basé sur les caractéristiques correspondant et de la classe de référence prédéterminée.

4. Procédé selon la revendication 3, **caractérisé en ce qu'**il comprend la prédiction (704, 806, 908) d'un bruit (*εₜ*) dans une sortie suivante (Zᵢ) de la séquence (*Z̃*_{*T*-2}, ... *Z̃*₀) en fonction de la sortie (*Z̃*_{*T*-1}, ... *Z̃*₁) précédant la sortie suivante (*Z̃*_{*i*-1}) dans la séquence de sorties (*Z*_{*T*-1}, ... *Z̃*₀), et l'apprentissage (712, 814, 918) des paramètres en fonction d'une perte liée au bruit et en fonction des pertes qui sont définies pour les discriminateurs basés sur des caractéristiques, la perte liée au bruit étant définie en fonction du bruit prédit et d'un bruit aléatoire prédéterminé, en particulier un bruit aléatoire échantillonné à partir d'une distribution gaussienne.

5. Procédé selon l'une des revendications précédentes, **caractérisé par** le fait de fournir (702, 804, 906) une condition (y), en particulier une carte d'étiquettes, à moduler les caractéristiques (*f*) en fonction de la condition (y) et de mapper les caractéristiques modulées (*f*) avec le modèle de diffusion (202) vers la sortie (Z₀), et/ou avec le discriminateur vers la classe.

6. Procédé selon la revendication 5, **caractérisé en ce qu'**il comprend l'apprentissage (712, 814, 918) des paramètres en fonction de la perte qui est définie pour le discriminateur basé sur des caractéristiques, dans lequel la perte qui est définie pour le discriminateur basé sur des caractéristiques est définie en fonction de la condition (y), ou l'apprentissage (712, 814, 918) des paramètres en fonction des pertes qui sont définies pour les discriminateurs basés sur les caractéristiques, les pertes étant définies en fonction de la condition (y).

7. Procédé selon la revendication 5 ou la revendication 6, **caractérisé en ce que** la condition (y) comprend la classe de référence prédéterminée ou les classes de référence pixel par pixel.

8. Procédé mis en œuvre par ordinateur pour fournir un système d'apprentissage automatique, en particulier un réseau neuronal pour la segmentation sémantique, la reconnaissance d'objets ou la classification d'objets, **caractérisé en ce que** le procédé comprend la génération d'une image numérique synthétique au moyen du procédé selon l'une des revendications précédentes, et l'entraînement, le test, la vérification ou la validation du système d'apprentissage automatique pour la segmentation sémantique, ou la reconnaissance d'objets ou la classification d'objets, de préférence pour la reconnaissance d'un arrière-plan ou d'un objet, en particulier d'un panneau de signalisation, d'une chaussée, d'un piéton, d'un véhicule, d'un animal, d'une plante, d'une infrastructure ou du ciel, en fonction de l'image numérique synthétique.

9. Procédé selon la revendication 8, **caractérisé en ce que** l'entraînement, le test, la vérification ou la validation du système d'apprentissage automatique comprennent la fourniture de la condition (y), en particulier la carte d'étiquettes, qui est fournie pour générer l'image numérique synthétique en tant que référence pour l'entraînement, le test, la vérification ou la validation du système d'apprentissage automatique.

10. Procédé mis en œuvre par ordinateur pour faire fonctionner un système technique (112), en particulier une machine commandée par ordinateur, de préférence un système robotique, un véhicule, un appareil électroménager, un outil électrique, une machine de fabrication, un assistant personnel ou un système de contrôle d'accès, **caractérisé en ce que** le procédé comprend la fourniture du système d'apprentissage automatique du procédé selon la revendication 8 ou la revendication 9, la capture d'une image numérique avec un capteur (108), en particulier d'une image vidéo, radar, LiDAR, à ultrasons, de mouvement ou thermique, et la détermination d'un signal de commande pour faire fonctionner le système technique (112) au moyen du système d'apprentissage automatique en fonction de l'image numérique.

11. Dispositif (100), **caractérisé en ce que** le dispositif (100) comprend au moins un processeur (102) et au moins une mémoire (104), dans lequel ledit au moins un processeur (102) est configuré pour exécuter des instructions qui, lorsqu'elles sont exécutées par ledit au moins un processeur (102), amènent le dispositif (100) à mettre en œuvre le procédé selon l'une des revendications précédentes, ladite au moins une mémoire (104) étant configurée pour stocker les instructions.

12. Programme informatique, **caractérisé en ce que** le programme informatique comprend des instructions lisibles par ordinateur qui, lorsqu'elles sont exécutées par un ordinateur, amènent l'ordinateur à mettre en œuvre le procédé selon l'une des revendications 1 à 10.
